# EUROPÄISCHE PATENTSCHRIFT

(11) **EP 3 564 022 B1**
(45) Veröffentlichungstag und Bekanntmachung des Hinweises auf die Patenterteilung: **07.05.2025**
(21) Anmeldenummer: 19163364.3
(22) Anmeldetag: 18.03.2019
(51) Int. Cl.: B29C 73/16, B29D 30/06, B60C 1/00, B60C 19/12

(54) **SELBSTTÄTIG ABDICHTENDES REIFENDICHTMITTEL UND FAHRZEUGLUFTREIFEN ENTHALTEND DAS REIFENDICHTMITTEL**
SELF-SEALING TYRE SEALANT AND VEHICLE TYRES CONTAINING SAME
AGENT D'ÉTANCHÉITÉ POUR PNEUMATIQUES ÉTANCHE DE MANIÈRE AUTONOME ET PNEUMATIQUES DE VÉHICULE CONTENANT DE L'AGENT D'ÉTANCHÉITÉ POUR PNEUMATIQUES

(30) Priorität: 11.04.2018 DE 102018205421
(43) Veröffentlichungstag der Anmeldung: 06.11.2019
(73) Patentinhaber: Continental Reifen Deutschland GmbH, 30175 Hannover (DE)
(72) Erfinder: Tim Kee, Sherry-Ann, 30165 Hannover (DE); Doroshenko, Mikheil, 30165 Hannover (DE); Tyburski, Andreas, 30165 Hannover (DE)
(74) Vertreter: Continental Corporation

(56) Entgegenhaltungen:
- EP-A1- 3 196 049
- EP-A1- 3 489 002
- FR-A- 1 024 935
- FR-A1- 2 874 616
- GB-A- 342 396
- US-A- 1 137 461
- US-A- 5 856 376

## Beschreibung

Die Erfindung betrifft ein selbsttätig abdichtendes Reifendichtmittel und einen Fahrzeugluftreifen enthaltend das Reifendichtmittel.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel zeichnet sich durch Luftdichtigkeit, starke Klebrigkeit und ausgewogenes Fließverhalten aus.

Das Dokument US 5 856 376 A offenbart ein selbsttätig abdichtendes Reifendichtmittel gemäß dem Oberbegriff des Anspruchs 1.

Der vorliegenden Erfindung liegt die Aufgabe zugrunde, ausgehend vom Stand der Technik ein selbsttätig abdichtendes Reifendichtmittel bereitzustellen, welches umweltfreundlicher ist und gleichzeitig eine gleiche oder sogar verbesserte Abdichtwirkung aufweist.

Gelöst wird diese Aufgabe durch das selbsttätig abdichtendes Reifendichtmittel gemäß Anspruch 1.

Durch die Verwendung von recyceltem Material ist das Dichtmittel umweltfreundlicher. Gleichzeitig weist es weiterhin eine gute Fließfähigkeit, eine gute Klebrigkeit und eine gute Ortsfestigkeit auf. Die Abdichtwirkung des erfindungsgemäßen Dichtmittels ist somit zumindest auf vergleichbarem Niveau, insbesondere auch nach dem (zufälligen) Entfernen des Einstichobjektes. Besonders vorteilhafte ist es, wenn das recycelte Material in Form von Partikeln, insbesondere als inaktiver oder im Wesentlichen inaktiver Füllstoff, enthalten ist. Hierdurch wird das Volumen des Dichtmittels erhöht und lokal an und in der Einstichstelle ein erhöhter Druck erzeugt und die Einstichstelle besser verschlossen, insbesondere auch nach dem (zufälligen) Entfernen des Einstichobjektes. Somit weist das erfindungsgemäße Dichtmittel in dieser Ausführungsform sogar eine verbesserte Abdichtwirkung auf.

Gemäß vorteilhafter Ausführungsformen enthält das Dichtmittel 0,2 bis 25 Gew.-% wenigstens eines recycelten Materials. Hierbei ist auch ein Gemisch verschiedener recycelter Materialien denkbar, wobei die Gesamtmenge bevorzugt 0,2 bis 25 Gew.-% beträgt. Hierdurch wird eine optimale Balance aus Fließverhalten, Klebrigkeit, Ortsfestigkeit und Umweltfreundlichkeit des Dichtmittels erzielt.

Die Angaben in Gew.-% beziehen sich auf das gesamte Dichtmittel inkl. aller Bestandteile, sofern nichts anderes angegeben ist.

Erfindungsgemäß umfasst das recycelte Material wenigstens einen Pyrolyse-Ruß.

Gemäß vorteilhafter Ausführungsformen der Erfindung umfasst das recycelte Material wenigstens einen regenerierten Kautschuk und/oder wiederaufbereitete Reste von Geräuschabsorbern.

Die genannten Materialien sind besonders gut geeignet, da ihre Ausgangsmaterialien in Fahrzeugreifen Verwendung finden und somit mit diesen kompatibel sind. Gleichzeitig ergeben sich ökonomische Vorteile.

Die genannten Materialien können insbesondere auch im Gemisch eingesetzt werden.

Pyrolyse-Ruß ist dem Fachmann bekannt. Er wird, wie beispielsweise in "Rubber Chemistry and Technology", Vol. 85, Nr. 3, Seiten 408 bis 449 (2012), insbesondere auf den Seiten 438 und 440 und 442, beschrieben, durch thermische Zersetzung von organischen Materialien bei 550 bis 800 °C unter Ausschluss von Sauerstoff oder mittels Vakuumpyrolyse bei vergleichsweise niedrigen Temperaturen im Bereich von 500 °C erhalten.

Im Rahmen der vorliegenden Erfindung handelt es sich bei den organischen Materialien bevorzugt um Altreifen und/oder vulkanisierten Produktionsabfällen aus der Reifenherstellung und/oder vulkanisierten Schläuchen, d.h. anfallende Abfallprodukte, die entsorgt werden müssen. Die Pyrolyse und Gewinnung von Pyrolyse-Ruß daraus, der erfindungsgemäß wieder Reifenmischungen zugesetzt wird, stellt somit einen Recyclingprozess dar.

Der Pyrolyse-Ruß ist somit bevorzugt mittels Pyrolyse aus Altreifen und/oder vulkanisierten Produktionsabfällen aus der Reifenherstellung und/oder vulkanisierten Schläuchen hergestellt.

Besonders bevorzugt wurde der Pyrolyseruß aus Altreifen und/oder Schläuchen hergestellt, ganz besonders bevorzugt aus Altreifen.

Bei vulkanisierten Produktionsabfällen aus der Reifenherstellung kann es sich um alle denkbaren vulkanisierten Kautschukmischungen für Fahrzeugreifen handeln, die Kautschukmischungen im Verbund mit Festigkeitsträgern einschließen.

Ein derartiger Pyrolyse-Ruß unterscheidet sich von bekannten Rußen, wie Industrierußen, insbesondere den ASTM-Rußen wie N660, u.a. im höheren Aschegehalt und gleichzeitig geringerem Gehalt an polyzyklischen aromatischen Kohlenwasserstoffen (PAK), wie beispielsweise der Homepage der Firma BlackBear Carbon BV zu entnehmen ist, http://www.blackbearcarbon.com/rfp-international/. Industrieruße weisen einen hohen Anteil an polyzyklischen aromatischen Kohlenwasserstoffen (PAK) auf. Industrieruße haben einen PAK-Gehalt von größer als 200 mg/kg.

Polyzyklische aromatische Kohlenwasserstoffe sind gesundheitsschädlich. In der GS-Spezifikation - Spezifikation gemäß § 21 Abs. 1 Nr. 3 ProdSG - sind bspw. einzuhaltende PAK-Höchstgehalte für Materialien von relevanten Kontakt-/Griff-und Betätigungsflächen kategorisiert.

Der PAK-Gehalt der eingesetzten Pyrolyse-Ruße beträgt weniger als 50 ppm (mg/kg), besonders bevorzugt weniger als 40 ppm, ganz besonders bevorzugt weniger als 30 ppm, wiederum bevorzugt weniger als 10 ppm. Die untere Grenze liegt im Bereich von 0,1 mg/kg, was die Nachweisgrenze von PAK darstellt. Grundsätzlich soll der PAK-Gehalt so gering wie möglich sein.

Der PAK-Gehalt wird gemäß ASTM D-5186 bestimmt.

Im Rahmen der vorliegenden Erfindung wird unter dem Ausdruck "Pyrolyse-Ruß, der mittels Pyrolyse aus Altreifen und/oder vulkanisierten Produktionsabfällen aus der Reifenherstellung und/oder vulkanisierten Schläuchen hergestellt wurde" alle dem Fachmann bekannten Pyrolyse-Ruße aus Altreifen und/oder vulkanisierten Produktionsabfällen aus der Reifenherstellung und/oder vulkanisierten Schläuchen verstanden, wobei die aufgeführten Ausführungsformen bevorzugt sind.

Im Rahmen der vorliegenden Erfindung wird unter dem Begriff "Industrieruße" die für Reifenmischungen bekannten Ruße, die keine Pyrolyse-Ruße sind, verstanden, die gemäß Römpp-Online-Lexikon ^{©} 2016 Georg Thieme Verlag KG (Stand 08.01.2016) üblicherweise einen Aschegehalt von weniger als 1 Gew.-% aufweisen und insbesondere sogenannte Furnace-Ruße, Gasruße oder Flammruße sind.

Ein geeigneter Pyrolyse-Ruß kann beispielsweise von der Fa. BBC unter dem Handelsnamen BBC500 oder von der Fa. Pyrolyx AG unter dem Handelsnamen CB e 603 erhalten werden.

Der Pyrolyse-Ruß weist bevorzugt einen Aschegehalt von 5 bis 30 Gew.-%, besonders bevorzugt 10 bis 30 Gew.-%, ganz besonders bevorzugt 10 bis 20 Gew.-%, auf. Gemäß einer bevorzugten Ausführungsform der Erfindung beträgt der Aschegehalt 15 bis 20 Gew.-%.

Der Aschegehalt bezieht sich nur auf den Pyrolyse-Ruß und wird mittels thermogravimetrischer Analyse (TGA) gemäß ASTM D1506 des Pyrolyse-Rußes bestimmt.

Mit einem derartigen Aschegehalt werden besonders gute physikalische Eigenschaften und zudem eine besonders gute Luftdichtigkeit des Dichtmittels erzielt.

Der Pyrolyse-Ruß weist ferner bevorzugt einen Schwefel-Gehalt von größer als 1 Gew.-%, besonders bevorzugt größer als 2 Gew.-%, ganz besonders bevorzugt 2 bis 6 Gew.-%, wiederum ganz besonders bevorzugt 2 bis 4 Gew.-%, und wiederum ganz besonders bevorzugt 2,2 bis 4 Gew.-%, auf.

Mit einem derartigen Schwefelgehalt werden besonders gute physikalische Eigenschaften des Dichtmittels erzielt.

Der Schwefelgehalt bezieht sich nur auf den Pyrolyse-Ruß und wird mittels ASTM D4239 des Pyrolyse-Rußes bestimmt.

Der Pyrolyse-Ruß weist ferner bevorzugt einen Kohlenstoffgehalt von 64 bis 87 Gew.-%, besonders bevorzugt 74 bis 87 Gew.-%, ganz besonders bevorzugt 78 bis 87 Gew.-%, auf.

Dem Fachmann ist bekannt, dass sich die Gewichtsanteile von Pyrolyse-Ruß aus enthaltener Asche, Schwefel und überwiegend (> 50 Gew.-%) Kohlenstoff zusammensetzen.

Der Pyrolyse-Ruß weist gemäß vorteilhafter Ausführungsformen eine Stickstoffoberfläche (BET-Oberfläche Jodadsorptionszahl gemäß ASTM D 1510 von 5 bis 100 g/kg und eine DBP-Zahl gemäß ASTM D 2414 von 30 bis 130 ml/100g, auf.

Gemäß der Erfindung beträgt die Menge an enthaltenem Pyrolyse-Ruß 2 bis 10 Gew.-%, wobei auch ein Gemisch verschiedener Pyrolyse-Ruße denkbar ist, wobei die angegebene Menge dann die Gesamtmenge an Pyrolyse-Rußen darstellt.

Gemäß einer vorteilhaften Ausführungsform der Erfindung handelt es sich bei dem recycelten Material um wenigstens einen regenerierten Kautschuk.

"Regenerierter Kautschuk" (Regenerat oder *engl.* Reclaim) wird aus schwefelvernetzten Gummivulkanisaten durch Spaltung der Schwefelbrücken gewonnen, wobei die Kautschukmischungen durch die stattfindende Devulkanisation vom elastischen in den plastischen Zustand überführt werden (devulkanisierte Kautschukmischungen).

Verfahren zur Regenerierung von schwefelvernetzten Gummivulkanisaten unter Zuhilfenahme von verschiedenen Substanzen und in unterschiedlichen Apparaturen sind im Stand der Technik bekannt, wobei die Dampfregeneration, die mechanische Regeneration, die thermische Regeneration, die Regeneration durch Schallwellen, die Regeneration durch Strahlung und die chemische Regeneration bekannt sind.

Unter dem Ausdruck "regenerierter Kautschuk" ist prinzipiell auch die Verwendung von verschiedenen regenerierten Kautschuken umfasst, sofern nichts anderes angegeben ist oder sich nicht ein anderes ergibt.

Als Ausgangsmaterialien für den regenerierten Kautschuk sind sämtliche vulkanisierten Kautschukartikel umfasst, wie beispielsweise und bevorzugt die schwefelvernetzten Gummivulkanisate aus Altreifen oder Förderbändern oder aus bei der Produktion von technischen Kautschukartikeln oder Fahrzeugluftreifen anfallendem vulkanisiertem Abfall stammen. Hierbei findet vor dem eigentlichen Regenerierungsverfahren oft ein oder mehrere Zerkleinerungsschritte statt, wodurch vulkanisiertes Gummigranulat oder vulkanisiertes Gummipulver oder - mehl erhalten wird.

Kautschuke, die noch gar nicht vulkanisiert sind, werden im Rahmen der vorliegenden Erfindung auch als Rohkautschuke bezeichnet. Hierbei sind sämtliche dem Fachmann bekannte Formen von Rohkautschuken umfasst, wie insbesondere Rohkautschukballen oder -felle.

Der Kautschuk, der dem regenerierten Kautschuk zugrunde liegt, ist bevorzugt ausgewählt aus der Gruppe bestehend aus Naturkautschuk (NR), synthetischem Polyisopren (IR), Butadien-Kautschuk (BR), Styrol-Butadien-Kautschuk (SBR), Butyl-Kautschuk (IIR) und Halobutyl-Kautschuk. Derartige Kautschuke finden insbesondere in Fahrzeugreifen Verwendung und sind mit den Bauteilen des Fahrzeugluftreifens sowie den in dem Dichtmittel bevorzugt enthaltenen sonstigen Bestandteilen kompatibel. Somit können insbesondere Altreifen über einen Recyclingprozess erfindungsgemäß wieder Verwendung finden.

Gemäß einer besonders vorteilhaften Ausführungsform der Erfindung umfasst der regenerierte Kautschuk regenerierten Butyl-Kautschuk (IIR), wobei auch weitere regenerierte Kautschuke enthalten sein können.

Gemäß einer besonders vorteilhaften Ausführungsform der Erfindung ist der regenerierte Kautschuk regenerierter Butyl-Kautschuk (IIR).

Gemäß einer vorteilhaften Ausführungsform der Erfindung beträgt die Menge an enthaltenem regeneriertem Kautschuk 10 bis 25 Gew.-%.

Hierdurch wird die Einstichstelle besonders effektiv verschlossen, insbesondere auch nach dem (zufälligen) Entfernen des Einstichobjektes.

Der regenerierte Kautschuk weist gemäß vorteilhafter Ausführungsformen eine Mooney-Viskosität -gemäß ASTM D1646- ML 1+4 bei 100 °C von 30 bis 60 Mooney-Einheiten auf, besonders bevorzugt 35 bis 55, ganz besonders bevorzugt 35 bis 45 Mooney-Einheiten.

Mit einer derartigen Viskosität wird eine besonders gute Mischbarkeit und Prozessierbarkeit erzielt.

Gemäß einer vorteilhaften Ausführungsform der Erfindung handelt es sich bei dem recycelten Material um wiederaufbereitete Reste von Geräuschabsorbern.

Unter "wiederaufbereiteten Resten" werden dabei insbesondere derartige Reste von Geräuschabsorbern verstanden, die bei der Herstellung von Artikeln umfassend einen oder mehrere Geräuschabsorber (wie geräuschoptimierte Fahrzeugreifen) anfallen, insbesondere als nicht für den jeweiligen Artikel verwendbare Abfälle anfallen. Die Wiederaufbereitung kann hierbei Zerkleinerungsschritte, Reinigungsschritte sowie Trocknungsschritte umfassen.

Bei dem Geräuschabsorber kann es sich prinzipiell um jedes Material handeln, welches insbesondere als Geräuschabsorber Anwendung findet oder hierfür geeignet ist. Insbesondere handelt es sich um Geräuschabsorber, wie sie in geräuschoptimierten Fahrzeugreifen Verwendung finden.

Bevorzugt handelt es sich dabei um wenigstens ein poröses Material. Poröse Materialien weisen insbesondere den Vorteil auf, dass sie neben der Geräuschabsorption zugleich ein nicht zu hohes Eigengewicht einbringen, sodass beispielsweise die Rollwiderstandseigenschaften eines Reifens mit dem Dichtmittel nicht unnötig verschlechtert werden.

Das poröse Material, aus dem der Geräuschabsorber ausgebildet ist, ist beispielsweise ausgewählt aus der Gruppe enthaltend Polyurethan, insbesondere Polyurethanschäume auf einer Polyetherbasis und/oder Polyurethanschäume auf einer Polyesterbasis mit einer Dichte von 18 bis 300 kg/m³, bevorzugt 30 bis 35 kg/m³, und einer Härte von 6,5 kilo-pascal, Polyester mit einer Dichte von 18 bis 300 kg/m³ bevorzugt 30 bis 35 kg/m³, und einer Härte von 6,5 kilo-pascal, Polyether, sowie beliebige poröse, schallabsorbierende Materialienmischungen, wie beispielsweise Glas- oder Steinwolle, textiler Schlingenware, textiler Hochflorware, textilem Gewebe, Vliesmaterialien oder Kork

Gemäß bevorzugter Ausführungsformen der Erfindung umfasst der Geräuschabsorber wenigstens ein Material, welches ausgewählt ist aus der Gruppe bestehend aus Polyurethanschäumen, Glaswolle, Steinwolle, textiler Schlingenware, textiler Hochflorware, textilem Gewebe, Vliesmaterialien und Kork.

Gemäß bevorzugter Ausführungsformen der Erfindung umfasst der Geräuschabsorber einen porösen, bei Raumtemperatur festen, Schaum.

Die wiederaufbereiteten Reste stellen somit beispielsweise zerkleinerte und ggf. gereinigte Reste von Schaumstoffabfällen dar.

Gemäß einer vorteilhaften Ausführungsform der Erfindung handelt es sich bei dem Material des Geräuschabsorbers um wenigstens ein Polyurethan, bevorzugt als poröser Schaum. Polyurethan ist aufgrund seiner spezifischen Dichte und sonstigen Materialbeschaffenheit sowie Verfügbarkeit besonders geeignet.

Gemäß einer vorteilhaften Ausführungsform der Erfindung beträgt die Menge an wiederaufbereiteten Resten von Geräuschabsorbern 0,2 bis 10 Gew.-%.

Wie oben beschrieben können die wiederaufbereiteten Reste von Geräuschabsorbern beispielsweise und bevorzugt in Form von Partikeln, erhalten durch Zerkleinerung, im Dichtmittel enthalten sein.

Gemäß bevorzugter Ausführungsformen der Erfindung beträgt die Partikelgröße 0,1 bis 10 mm, besonders bevorzugt 0,1 bis 5 mm, ganz besonders bevorzugt beispielsweise 0,1 bis 3 mm.

Hierdurch wird eine optimale Balance aus Fließverhalten und Abdichtwirkung in der Einstichstelle, insbesondere auch nach dem (zufälligen) Entfernen des Einstichobjektes, erzielt.

Die Partikelgröße wird mittels SEM ("scanning electron microscopy") bestimmt.

Hierbei ist unter Partikelgröße der größtmögliche Abstand in der zweidimensionalen Projektion eines Partikels zu verstehen. Bei sphärisch geformten Partikeln, entspricht dies dem Durchmesser.

Gemäß der Erfindung basiert das Dichtungsmittel auf der Vernetzung eines Kautschuks und Polyolefins Gemäß einer vorteilhaften und beispielsweisen Ausführungsform basiert das Dichtmittel auf der Vernetzung eines Kautschuks und/oder Polyolefins.

Bei dem Kautschuk handelt es sich hier um Rohkautschuk, sodass das unvernetzte Dichtmittel sowohl devulkanisierten Kautschuk (s. oben) als auch unvulkanisierten Kautschuk enthalten kann.

Dem Fachmann ist klar, dass sämtliche genannten Bestandteile im vernetzten Dichtmittel zumindest teilweise in chemisch veränderter Form, insbesondere als Derivate, vorliegen.

Bei dem (Roh-)Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).

Diese Kautschuktypen sind für die Verarbeitungstemperaturen bei der Herstellung des Dichtmittels und später bei der Anwendung, insbesondere im Fahrzeugluftreifen, besonders gut geeignet.

Besonders bevorzugt wird wenigstens Butylkautschuk (IIR) verwendet. Butylkautschuk eignet sich besonders gut, da er eine vergleichsweise hohe Luftdichtigkeit aufweist.

Gemäß der Erfindung enthält das selbsttätig abdichtende Reifendichtmittel 40 bis 80 Gew.-%, besonders bevorzugt 50 bis 75 Gew.-%, wenigstens eines Polyolefins. Hiermit wird ein optimales Fließverhalten bei einer gleichzeitig guten Herstellbarkeit (Prozessierbarkeit) des Dichtmittels erzielt.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mn von 400 bis 2500 g/mol handeln, wobei sich die Polybutene im Mn unterscheiden können.

Geeignete Polybutene, auch Polyisobutene genannt, sind beispielsweise unter den Handelsnamen Indopol^{®} Polybutene der Firma INEOS Capital Limited erhältlich.

Es ist auch ein Gemisch wenigstens eines Polybutens mit wenigstens einem weiteren Polyolefin denkbar.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Das Dichtmittel kann ferner weitere Bestandteile enthalten, wie insbesondere weitere Füllstoff(e), Klebrigmacher, Weichmacher, wie z. B. Öl(e), sowie gegebenenfalls weitere Zusatzstoffe, wie z. B. Farbpigmente und/oder Zinkoxid und/oder Schwefel.

Gemäß einer bevorzugten Ausführungsform der Erfindung enthält das Dichtmittel zudem wenigstens einen weiteren Füllstoff, insbesondere wenigstens einen aktiven Füllstoff.

Bei dem weiteren Füllstoff kann es sich um alle dem Fachmann bekannten Füllstoffe handeln, wie insbesondere verstärkende Füllstoffe, wie Industrieruß und/oder Kieselsäure, wobei insbesondere gefällte Kieselsäuren gemeint und bevorzugt sind, die als Füllstoffe für Reifenkautschukmischungen bekannt sind.

Ferner sind weitere verstärkende und nicht verstärkende Füllstoffe, insbesondere Siliziumoxid basierte Füllstoffe, wie Silikate oder Sand, denkbar sowie ggf. verstärkende Füllstoffe wie z.B. Graphit und Graphene und sogenannte "carbonsilica dual-phase filler".

Gemäß einer bevorzugten Ausführungsform der Erfindung umfasst der weitere Füllstoff wenigstens einen Industrieruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Als Ruße sind im Rahmen der vorliegenden Erfindung prinzipiell alle dem Fachmann bekannten Ruß-Typen denkbar.

Gemäß einer vorteilhaften Ausführungsform der Erfindung wird ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist.

Gemäß einer weiteren bevorzugten Ausführungsform der Erfindung wird ein Ruß des Typs N326 verwendet.

Es ist auch ein Gemisch von zwei oder mehreren Rußen denkbar.

Gemäß einer weiteren bevorzugten Ausführungsform der Erfindung umfasst der weitere Füllstoff wenigstens eine Kieselsäure (engl. "silica").

Hierdurch wird eine optimale Verstärkung des Dichtmittels erzielt und eine gute Viskositätskontrolle und -einstellung ermöglicht. Zudem wird mit wenigstens einer Kieselsäure die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Es ist auch ein Gemisch von zwei oder mehreren Kieselsäuren denkbar.

Bei den Kieselsäuren kann es sich um die dem Fachmann bekannten Kieselsäuren, die als Füllstoff für Reifenkautschukmischungen geeignet sind, handeln. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay) verwendet werden.

Ferner ist ein Gemisch der genannten weiteren Füllstoffe denkbar und bevorzugt, wie insbesondere wenigstens ein Industrieruß in Kombination mit wenigstens einer Kieselsäure, wobei sich ebenfalls die genannten Vorteile ergeben.

Die Menge des wenigstens einen weiteren Füllstoffs beträgt gemäß einer Ausführungsform 0,1 bis 15 Gew.-%, beispielsweise 5 bis 10 Gew.-%, bezogen auf die Gesamtmenge an Dichtmittel.

Gemäß einer weiteren Ausführungsform der Erfindung ist kein weiterer Füllstoff, d. h. 0 Gew.-% weiterer Füllstoff enthalten.

Das Dichtmittel enthält gemäß vorteilhafter Ausführungsformen wenigstens einen Klebrigmacher, und zwar insbesondere für den Fall, dass das Dichtmittel nicht bereits aufgrund der enthaltenen Bestandteile, insbesondere der Polymere eine ausreichende Klebrigkeit aufweist. Unter "Klebrigmacher" wird prinzipiell jede Substanz verstanden, die die Klebrigkeit des Dichtmittels erhöht.

Gemäß vorteilhafter Ausführungsformen der Erfindung handelt es sich bei dem Klebrigmacher um wenigstens ein Kohlenwasserstoffharz.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".

Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene.

Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln.

Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Gemäß einer bevorzugten Ausführungsform der Erfindung handelt es sich bei dem Kohlenwasserstoffharz um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.

Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer bevorzugten Ausführungsform der Erfindung handelt es sich bei dem Kohlenwasserstoffharz um wenigstens ein Harz, welches wenigstens aus C₅-Monomeren aufgebaut ist und dem Fachmann als sogenanntes C₅-Harz bekannt ist. Hiermit werden besonders gute Eigenschaften des Dichtmittels, insbesondere ein optimiertes Fließverhalten bei gleichzeitig guter Klebrigkeit, erzielt.

Bei den aliphatischen C₅-Monomeren kann es sich um Monomere der C₅-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.

Ferner ist dem Fachmann bekannt, dass die C₅-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Gemäß vorteilhafter Ausführungsformen der Erfindung enthält das Dichtmittel 2 bis 20 Gew.-% wenigstens eines Kohlenwasserstoffharzes als Klebrigmacher. Bevorzugt beträgt die Menge des wenigstens einen Kohlenwasserstoffharzes 2 bis 10 Gew.-%, besonders bevorzugt 5 bis 8 Gew%.

Mit derartigen bevorzugten und besonders bevorzugten Mengen werden die Klebrigkeit und die Viskosität des Dichtmittels weiter optimiert.

Gemäß vorteilhafter und beispielhafter Ausführungsformen der Erfindung enthält das Dichtmittel folgende Bestandteile in folgenden Mengen:
- 0,2 bis 25 Gew.-% wenigstens eines recycelten Materials
- 50 bis 75 Gew.-% wenigstes eines Polyolefins, bevorzugt wenigstens eines Polybutens, und
- 2,0 bis 20 Gew.-% wenigstens eines Klebrigmachers und
- 9,0 bis 15 Gew.-% wenigstens eines Kautschuks und
- 5,0 bis 9 Gew.-% wenigstens eines weiteren Füllstoffs und
- 0,4 bis 0,8 Gew.-% wenigstens eines Vernetzers und
- 0,5 bis 1,2 Gew.-% wenigstens eines Vernetzungsinitiators.

Die Angaben in Gew.-% beziehen sich jeweils auf die Gesamtmenge an Dichtmittel.

Das erfindungsgemäße Reifendichtmittel kann durch im Stand der Technik bekannte Verfahren hergestellt werden, wobei das wenigstens eine recycelte Material beispielsweise wie andere Materialien, insbesondere wie Füllstoffe, in einer möglichen Vorstufe des Dichtmittels eingemischt werden.

Ein weiterer Gegenstand der vorliegenden Erfindung ist ein Fahrzeugluftreifen, der das erfindungsgemäße Reifendichtmittel inklusive aller genannten Ausführungen wenigstens auf der dem Laufstreifen gegenüberliegenden Innenfläche aufweist.

## Patentansprüche

1. Selbsttätig abdichtendes Reifendichtmittel, welches wenigstens ein recyceltes Material enthält, **dadurch gekennzeichnet, dass** das Dichtmittel auf der Vernetzung eines Kautschuks und Polyolefins basiert, wobei das recycelte Material wenigstens einen Pyrolyse-Ruß umfasst, wobei der Pyrolyse-Ruß einen Gehalt an polyzyklischen aromatischen Kohlenwasserstoffen (PAK) gemäß ASTM D-5186 von weniger als 50 ppm (mg/kg), besonders bevorzugt weniger als 40 ppm, ganz besonders bevorzugt weniger als 30 ppm, wiederum bevorzugt weniger als 10 ppm, aufweist, wobei die Menge an enthaltenem Pyrolyse-Ruß 2 bis 10 Gew.-% beträgt, und wobei das Reifendichtmittel 40 bis 80 Gew.-% wenigstens eines Polyolefins enthält.

2. Reifendichtmittel nach Anspruch 1, **dadurch gekennzeichnet, dass** das recycelte Material in Form von Partikeln, insbesondere als inaktiver Füllstoff, enthalten ist.

3. Reifendichtmittel nach einem der vorherigen Ansprüche, **dadurch gekennzeichnet, dass** es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR) handelt.

4. Reifendichtmittel nach einem der vorherigen Ansprüche, **dadurch gekennzeichnet, dass** das Polyolefin wenigstens ein Polybuten ist, wobei das Polybuten ein Zahlenmittel der Molekulargewichtsverteilung Mn gemäß GPC von 400 bis 2500 g/mol aufweist.

5. Reifendichtmittel nach einem der vorherigen Ansprüche, **dadurch gekennzeichnet, dass** das recycelte Material wenigstens einen regenerierten Kautschuk und/oder wiederaufbereitete Reste von Geräuschabsorbern umfasst, wobei der Geräuschabsorber wenigstens ein Material umfasst, welches ausgewählt ist aus der Gruppe bestehend aus Polyurethanschäumen, Glaswolle, Steinwolle, textiler Schlingenware, textiler Hochflorware, textilem Gewebe, Vliesmaterialien und Kork.

6. Reifendichtmittel nach Anspruch 5, **dadurch gekennzeichnet, dass** der regenerierte Kautschuk aus Altreifen und/oder Förderbändern und/oder aus bei der Produktion von technischen Kautschukartikeln und/oder Fahrzeugluftreifen anfallendem vulkanisiertem Abfall stammt.

7. Reifendichtmittel nach Anspruch 5 oder 6 **dadurch gekennzeichnet, dass** die Menge an enthaltenem regeneriertem Kautschuk 10 bis 25 Gew.-% beträgt.

8. Reifendichtmittel nach Anspruch 5 oder 6 oder 7 **dadurch gekennzeichnet, dass** der regenerierte Kautschuk eine Mooney-Viskosität ML 1+4 bei 100 °C gemäß ASTM D1646 von 30 bis 60 Mooney-Einheiten aufweist.

9. Reifendichtmittel nach Anspruch 5 **dadurch gekennzeichnet, dass** die Menge an wiederaufbereiteten Resten von Geräuschabsorbern 0,2 bis 10 Gew.-% beträgt.

10. Fahrzeugluftreifen, der das Reifendichtmittel nach einem der Ansprüche 1 bis 9 wenigstens auf der dem Laufstreifen gegenüberliegenden Innenfläche aufweist.

## Claims

1. Self-sealing tyre sealant containing at least one recycled material, **characterized in that** the sealant is based on the crosslinking of a rubber and polyolefin, wherein the recycled material comprises at least one pyrolysis carbon black, wherein the pyrolysis carbon black has a content of polycyclic aromatic hydrocarbons (PAH) according to ASTM D-5186 of less than 50 ppm (mg/kg), particularly preferably less than 40 ppm, very particularly preferably less than 30 ppm, in turn preferably less than 10 ppm, wherein the amount of pyrolysis carbon black present is 2% to 10% by weight and wherein the tyre sealant contains 40% to 80% by weight of at least one polyolefin.

2. Tyre sealant according to Claim 1, **characterized in that** the recycled material is present in the form of particles, especially as inactive filler.

3. Tyre sealant according to either of the preceding claims, **characterized in that** the rubber is natural rubber (NR) and/or butadiene rubber (BR) and/or isoprene rubber (IR) and/or styrene-butadiene rubber (SBR) and/or polychloroprene (CR) and/or butyl rubber (IIR) and/or bromobutyl rubber (BIIR) and/or chlorobutyl rubber (CIIR).

4. Tyre sealant according to any of the preceding claims, **characterized in that** the polyolefin is at least one polybutene, wherein the polybutene has a number-average molecular weight distribution Mn according to GPC of 400 to 2500 g/mol.

5. Tyre sealant according to any of the preceding claims, **characterized in that** the recycled material comprises at least one regenerated rubber and/or reprocessed residues of sound deadenings, wherein the sound deadening comprises at least one material selected from the group consisting of polyurethane foams, glass wool, rock wool, textile loop pile products, textile deep pile products, textile fabric, nonwoven materials and cork.

6. Tyre sealant according to Claim 5, **characterized in that** the regenerated rubber is derived from end-of-life tyres and/or conveyor belts and/or from vulcanized scrap generated during production of technical rubber articles and/or pneumatic vehicle tyres.

7. Tyre sealant according to Claim 5 or 6, **characterized in that** the amount of regenerated rubber present is 10% to 25% by weight.

8. Tyre sealant according to Claim 5 or 6 or 7, **characterized in that** the regenerated rubber has a Mooney viscosity ML 1+4 at 100°C according to ASTM D1646 of 30 to 60 Mooney units.

9. Tyre sealant according to Claim 5, **characterized in that** the amount of reprocessed residues of sound deadenings is 0.2% to 10% by weight.

10. Pneumatic vehicle tyre which comprises the tyre sealant according to any of Claims 1 to 9 at least on the interior surface opposite the tread.

## Revendications

1. Agent d'étanchéité pour pneumatiques à auto-étanchéité contenant au moins un matériau recyclé, **caractérisé en ce que** l'agent d'étanchéité est basé sur la réticulation d'un caoutchouc et d'une polyoléfine, le matériau recyclé comprenant au moins un noir de carbone de pyrolyse, le noir de carbone de pyrolyse présentant une teneur en hydrocarbures aromatiques polycycliques (HAP) selon la norme ASTM D-5186 inférieure à 50 ppm (mg/kg), de manière particulièrement préférée inférieure à 40 ppm, de manière tout particulièrement préférée inférieure à 30 ppm, de préférence encore inférieure à 10 ppm, la quantité de noir de carbone de pyrolyse contenu étant de 2 à 10 % en poids, et l'agent d'étanchéité pour pneumatiques contenant de 40 à 80 % en poids d'au moins une polyoléfine.

2. Agent d'étanchéité pour pneumatiques selon la revendication 1, **caractérisé en ce que** le matériau recyclé est contenu sous forme de particules, notamment sous forme de charge inactive.

3. Agent d'étanchéité pour pneumatiques selon l'une quelconque des revendications précédentes, **caractérisé en ce que** le caoutchouc consiste en du caoutchouc naturel (NR) et/ou du caoutchouc de butadiène (BR) et/ou du caoutchouc d'isoprène (IR) et/ou du caoutchouc de styrène-butadiène (SBR) et/ou du polychloroprène (CR) et/ou du caoutchouc de butyle (IIR) et/ou du caoutchouc de bromobutyle (BIIR) et/ou du caoutchouc de chlorobutyle (CIIR).

4. Agent d'étanchéité pour pneumatiques selon l'une quelconque des revendications précédentes, **caractérisé en ce que** la polyoléfine est au moins un polybutène, le polybutène présentant une distribution de masse moléculaire moyenne en nombre Mn selon la CPG de 400 à 2 500 g/mol.

5. Agent d'étanchéité pour pneumatiques selon l'une quelconque des revendications précédentes, **caractérisé en ce que** le matériau recyclé comprend au moins un caoutchouc régénéré et/ou des résidus reconditionnés d'absorbeurs de bruit, l'absorbeur de bruit comprenant au moins un matériau choisi dans le groupe constitué par les mousses de polyuréthane, la laine de verre, la laine de roche, les textiles bouclés, les textiles à poils longs, les tissus textiles, les matériaux non tissés et le liège.

6. Agent d'étanchéité pour pneumatiques selon la revendication 5, **caractérisé en ce que** le caoutchouc régénéré provient de pneumatiques usagés et/ou de bandes transporteuses et/ou de déchets vulcanisés générés lors de la production d'articles techniques en caoutchouc et/ou de pneumatiques de véhicules.

7. Agent d'étanchéité pour pneumatiques selon la revendication 5 ou 6, **caractérisé en ce que** la quantité de caoutchouc régénéré contenu est de 10 à 25 % en poids.

8. Agent d'étanchéité pour pneumatiques selon la revendication 5 ou 6 ou 7 **caractérisé en ce que** le caoutchouc régénéré présente une viscosité Mooney ML 1+4 à 100 °C selon ASTM D1646 de 30 à 60 unités Mooney.

9. Agent d'étanchéité pour pneumatiques selon la revendication 5, **caractérisé en ce que** la quantité de résidus reconditionnés d'absorbeurs de bruit est de 0,2 à 10 % en poids.

10. Pneumatique de véhicule, qui présente l'agent d'étanchéité pour pneumatiques selon l'une quelconque des revendications 1 à 9 au moins sur la face intérieure opposée à la bande de roulement.
